# DEMANDE DE BREVET EUROPEEN

(11) **EP 3 264 048 A1**
(43) Date de publication de la demande: **03.01.2018**
(21) Numéro de dépôt: 17175675.2
(22) Date de dépôt: 13.06.2017
(51) Int. Cl.: G01D 11/30, F16D 25/00

(54) **CYLINDRE DE COMMANDE HYDRAULIQUE EQUIPE D'UN CAPTEUR ASSEMBLE SUR LE CORPS DU CYLINDRE DE COMMANDE HYDRAULIQUE**

(30) Priorité: 27.06.2016 FR 1655942
(71) Demandeur: Valeo Embrayages, 80009 Amiens Cedex 2 (FR)
(72) Inventeur: MOLLIER, Christophe, 80009 AMIENS (FR); BEDRIGNANS, Jean-Baptiste, 12084 MONDOVI (IT); DREAN, Jerome, 12084 MONDOVI (IT); KOPP, Gabriel, 14125 MONDEVILLE (FR)
(74) Mandataire: Cardon, Nicolas

(57) **Abrégé**

L'invention concerne un cylindre (10) de commande hydraulique, notamment cylindre de commande hydraulique d'embrayage de véhicule automobile, comportant au moins un corps (12) et un boîtier (16) :
- le corps (12) comportant un logement (20) dans lequel le boîtier (16) est monté par translation selon une direction et un sens de montage (F), le logement (20) étant au moins délimité par deux parois latérales (24, 26) comportant deux faces de guidage (28, 29) se faisant face et coopérant avec le boîtier (16) afin de le guider en translation, et au moins une des deux parois latérales comportant un moyen de verrouillage (32) agencé sur une face opposée à la face de guidage et présentant une surface d'appui (42) formée au moins en partie d'un plan incliné par rapport à la direction de montage ; et
- le boîtier (16) comportant au moins un moyen de fixation élastique coopérant avec le moyen de verrouillage de sorte à bloquer en translation le boîtier (16) à l'intérieur du logement (20), le moyen de fixation comportant une languette élastique (50) s'étendant selon la direction et le sens de montage (F) et coopérant avec la surface d'appui (42) du moyen de verrouillage (32), de sorte qu'une extrémité libre (52) de la languette élastique soit en compression contre le plan incliné du moyen de verrouillage (32).

## Description

L'invention se rapporte au domaine des actionneurs hydrauliques, notamment aux actionneurs hydrauliques d'embrayage pour véhicules automobiles et concerne plus particulièrement un cylindre de commande hydraulique équipé d'un boîtier, par exemple électronique, comportant un capteur qui est assemblé au corps du cylindre de commande hydraulique.

Plusieurs méthodes de fixation d'un boîtier sur un cylindre de commande hydraulique sont connues. Notamment, les documents DE102009042807 et DE102009013393 décrivent de tels assemblages d'un boîtier sur le corps d'un cylindre de commande.

Compte-tenu des exigences croissantes de fiabilité dans l'automobile, l'assemblage de certains organes entre eux, notamment les boîtiers logeant des capteurs sur les corps des actionneurs, doit assurer que le démontage soit irréversible voire l'empêcher, ou au moins rendre ce démontage aisément identifiable.

En outre, afin d'assurer une bonne précision des capteurs logés dans ces boîtiers, l'assemblage doit assurer une fixation des boîtiers sur le corps des actionneurs sans jeu. De ce point de vue, les solutions proposées par l'art antérieur sont insatisfaisantes qui sont conçues avec un jeu afin de permettre l'assemblage.

L'invention vise à améliorer l'assemblage d'un boîtier sur un corps de cylindre à commande hydraulique de sorte que le boîtier soit assemblé sur le corps de façon simple, précise et fixe.

À cet effet, la présente invention a pour objet un cylindre de commande hydraulique, notamment cylindre de commande hydraulique d'embrayage de véhicule automobile, comportant au moins un corps et un boîtier :
- le corps comportant un logement dans lequel le boîtier est monté par translation selon une direction et un sens de montage, le logement étant au moins délimité par deux parois latérales comportant deux faces de guidage se faisant face et coopérant avec le boîtier afin de le guider en translation, et au moins une des deux parois latérales comportant un moyen de verrouillage agencé sur une face opposée à la face de guidage et présentant une surface d'appui formée au moins en partie d'un plan incliné par rapport à la direction de montage ; et
- le boîtier comportant au moins un moyen de fixation élastique coopérant avec le moyen de verrouillage de sorte à bloquer en translation le boîtier à l'intérieur du logement, le moyen de fixation comportant une languette élastique s'étendant selon la direction et le sens de montage et coopérant avec la surface d'appui du moyen de verrouillage, de sorte qu'une extrémité libre de la languette élastique soit en compression contre le plan incliné du moyen de verrouillage.

Avantageusement, un tel cylindre de commande hydraulique garantit un assemblage simple du boîtier sur le corps du cylindre et sans jeu. Notamment, la position du boîtier par rapport au corps selon une direction axiale ou une direction radiale est sans jeu assurant une bonne précision d'un éventuel capteur logé dans le boîtier.

Par convention l'orientation « radiale » est dirigée orthogonalement à l'axe de coulissement d'un piston dans le corps du cylindre hydraulique définissant l'orientation axiale.

Le cylindre de commande hydraulique selon l'invention peut également comprendre une ou plusieurs des caractéristiques ci-dessous, considérées individuellement ou selon toutes les combinaisons techniquement possibles :
- le plan incliné de la surface d'appui forme un angle avec la direction du sens de montage compris entre 30 et 60°, de préférence sensiblement égale à 45° ;
- la surface d'appui du moyen de verrouillage comporte une surface s'étendant perpendiculairement à la languette élastique ;
- l'extrémité libre de la languette élastique comporte un chanfrein ;
- le moyen de verrouillage comporte une nervure de forme complémentaire à la forme de la languette et s'étendant perpendiculairement à la languette élastique ;
- la nervure a une forme sensiblement en V ;
- le cylindre comporte au moins un ergot agencé selon une direction perpendiculaire au sens de montage de sorte que l'ergot soit en compression entre la languette élastique et la nervure. Dans un exemple, l'ergot peut être élastique ;
- la direction de montage est suivant une direction parallèle à l'axe du cylindre ;
- la direction de montage est suivant une direction perpendiculaire à l'axe du cylindre ;
- les parois latérales du corps s'étendent sensiblement dans un plan parallèle à l'axe du cylindre.
- les parois latérales du corps s'étendent sensiblement dans un plan transverse à l'axe du cylindre.
- le boîtier est réalisé principalement en matière plastique ;
- le boîtier contient un dispositif électronique comportant une carte et des composants électroniques ;
- le boîtier est muni d'un connecteur permettant de le relier à un autre composant électrique ou électronique ;
- le corps de l'actionneur est sensiblement cylindrique et comporte un alésage interne logeant un piston apte à coulisser dans ledit alésage interne et le logement est ménagé sur une portion radialement externe du corps de l'actionneur ;
- le capteur est apte à mesurer la position du piston ;
- le piston est équipé d'un ou de plusieurs aimants et dans lequel le capteur est un capteur à effet Hall.
- le nombre de languettes élastiques, leur longueur, leur forme et par conséquent ceux des moyens de verrouillage correspondant peuvent être différents d'un côté à un autre du boîtier. Ceci présente l'avantage d'éviter un montage à l'envers du boîtier.

D'autres caractéristiques et avantages de l'invention apparaîtront à la lecture de la description détaillée de plusieurs modes de réalisation donnés uniquement à titre d'exemples non limitatifs et illustratifs, en référence aux dessins annexés :
- la figure 1 illustre une vue générale d'un cylindre de commande hydraulique équipé d'un boîtier selon l'invention ;
- la figure 2 est une vue en section d'un moyen de verrouillage d'un corps du cylindre de la figure 1 ;
- la figure 3 est la même vue en coupe du cylindre que la figure 2, le boîtier étant fixé sur le corps ;
- la figure 4 représente une vue tridimensionnelle partielle d'un boîtier assemblé sur le corps du cylindre de la figure 1 ;
- les figures 5 et 6 représentent des vues tridimensionnelles du corps du cylindre des figures précédentes selon deux orientations différentes ;
- la figure 7 illustre une vue en section d'un moyen de fixation élastique du boîtier des figures précédentes ;
- la figure 8 représente une vue de profil du boîtier du cylindre des figures précédentes ;
- la figure 9 est une vue partielle du boîtier du cylindre des figures précédentes ; et
- la figure 10 est une vue de dessus du boîtier assemblé sur le corps du cylindre de la figure 1.

Sur les figures, les éléments analogues sont désignés par des références identiques. En outre, les différents éléments ne sont pas nécessairement représentés à l'échelle afin de présenter une vue permettant de faciliter la compréhension de l'invention.

Dans la description et les revendications, on utilisera, les termes "externe" et "interne", ou « extérieur » et « intérieur » ainsi que les orientations "axiale" et "radiale" pour désigner, selon les définitions données dans la description, des éléments du cylindre de commande hydraulique. Par convention, l'orientation "radiale" est dirigée orthogonalement à l'axe X de coulissement du piston du cylindre déterminant l'orientation "axiale" et, de l'intérieur vers l'extérieur en s'éloignant dudit axe. Les termes "externe" et "interne" ou « extérieur » et « intérieur » sont utilisés pour définir la position relative d'un élément par rapport à un autre, par référence à l'axe X, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale.

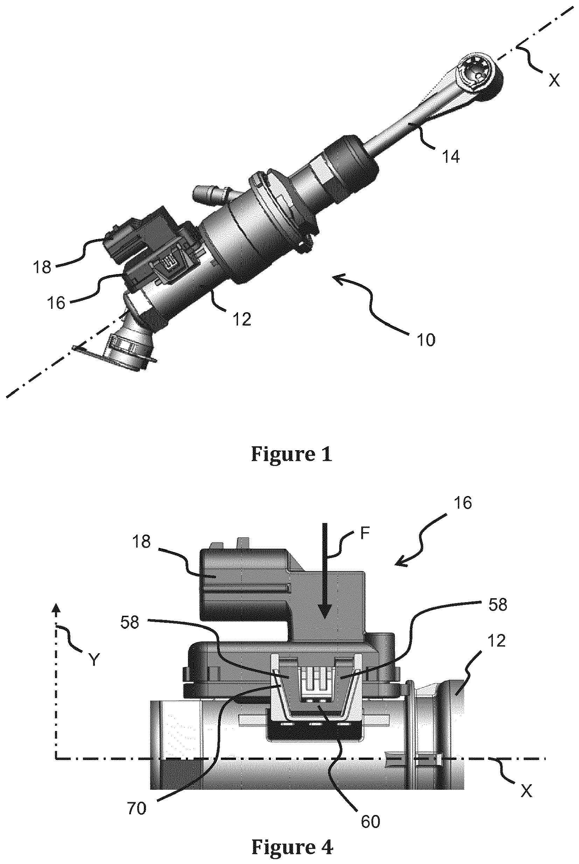

La figure 1 représente un cylindre de commande hydraulique 10 de type émetteur. Le cylindre 10 comporte un corps 12 globalement tubulaire qui s'étend axialement suivant un axe principal, noté X.

Le corps 12 comporte un alésage interne dans lequel un piston coulisse selon l'axe X. Le piston est relié à une tige de commande 14. Le corps 12 comporte à l'avant une chambre hydraulique à volume variable qui est délimitée axialement, d'avant en arrière, par une paroi transversale du corps, par l'alésage interne et par une face avant du piston.

Le corps 12 du cylindre est réalisé d'au moins deux parties, à savoir une partie avant et une partie arrière qui sont solidarisées l'une à l'autre. Le corps 12 peut être réalisé en matière plastique, par exemple en polyamide 6-6 renforcé, en métal par moulage ou forgeage puis usinage, ou être réalisé en partie en métal et en partie en plastique.

Ce type de cylindre est destiné à être utilisé dans des systèmes hydrauliques de commande d'embrayage qui comportent un émetteur précité qui est relié par un circuit hydraulique à un récepteur, non représenté. Le récepteur comporte également un corps présentant un alésage interne dans lequel coulisse un piston, celui-ci étant apte à agir sur la butée d'un embrayage, par exemple par l'intermédiaire d'une tige de commande agissant sur une fourchette d'embrayage.

En fonctionnement, l'émetteur est destiné à expulser vers le récepteur un fluide, tel que de l'huile, qui est contenu dans sa chambre hydraulique. Lorsque le conducteur débraye, la tige de commande 14 du cylindre 10 est déplacée de telle sorte que le piston du cylindre 10 chasse le fluide hydraulique en direction du récepteur de manière à actionner l'embrayage.

Le cylindre 10 comporte en outre un boîtier 16 comprenant un dispositif électronique. Par exemple, le dispositif électronique comporte une carte et des composants électroniques.

De préférence, le boîtier 16 comprend un capteur et un circuit électronique (non représentés) aptes à mesurer et délivrer une grandeur physique liée au fonctionnement du cylindre.

Selon un mode de réalisation, le capteur est un capteur de position apte à délivrer une grandeur physique représentative de la position du piston à l'intérieur du corps. Pour ce faire, le piston peut être équipé d'un ou de plusieurs aimants alors que le capteur de position est un capteur à effet Hall apte à mesurer un champ magnétique.

Le boîtier 16 est de préférence réalisé en matière plastique, tel que le polyamide 6-6, optionnellement renforcé par des fibres de verre, ou le polytéréphtalate de butylène.

Par ailleurs, le boîtier 16 comporte un connecteur 18 permettant de raccorder le boîtier 16 à d'autres composants électriques et électroniques, tels qu'une unité de pilotage d'un véhicule automobile, de manière à autoriser l'échange de données entre le cylindre et son environnement.

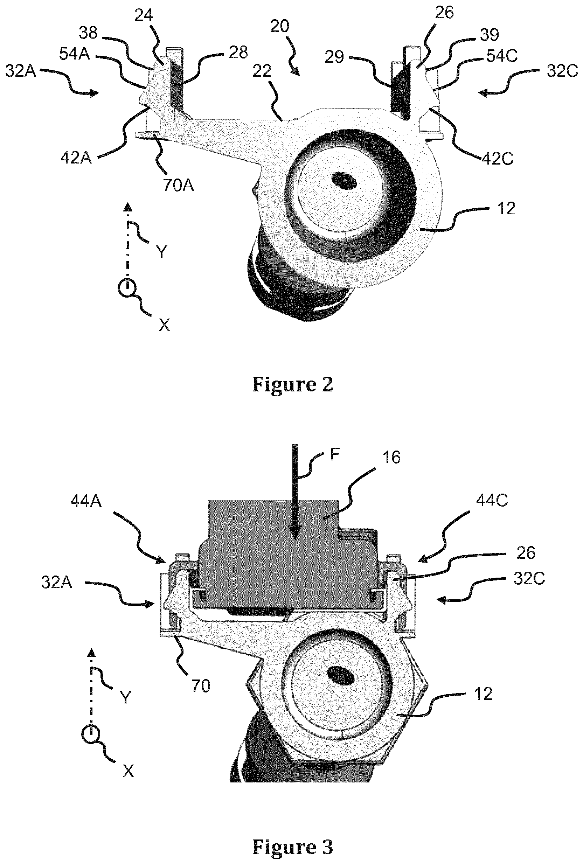

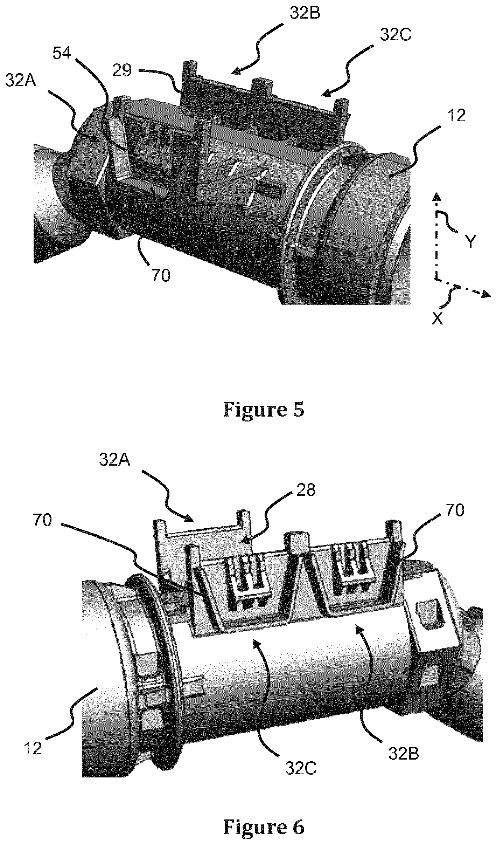

En référence aux figures 2 à 6, le boîtier 16 est reçu dans un logement 20 ménagé dans le corps 12 du cylindre 10. Le logement 20 est délimité, radialement vers l'intérieur, par une paroi de fond 22 qui est ménagée sur une portion externe du corps 12 du cylindre 10 et est contigüe à l'alésage interne formé dans le corps 12.

Le logement 20 est en outre délimité latéralement par deux parois latérales 24, 26 se faisant face et bordant la paroi de fond 22. Les deux parois latérales 24, 26 sont configurées pour assurer le guidage en translation du boîtier 16 par rapport à son logement 20 au cours du montage selon une direction et un sens de montage. Selon l'invention, la direction de montage du boîtier 16 dans le logement 20 est une direction perpendiculaire à l'axe X du cylindre, et illustrée par la flèche notée F sur les figures 3 et 4. Les parois latérales 24, 26 comprennent chacune une face de guidage plane 28, 29 se faisant face et coopérant avec le boîtier afin de le guider en translation. Selon le mode réalisation illustré sur les figures, les faces de guidage 28, 29 s'étendent dans un plan parallèle à l'axe X du cylindre, c'est-à-dire selon les directions X et Y.

Le boîtier 16 est ainsi apte à être monté par translation dans le logement 20 selon une direction de montage orientée selon la flèche F. Ce mouvement de translation est bloqué dans le sens de l'insertion par au moins un moyen de verrouillage.

Notamment, au moins une des deux parois latérales 24, 26 comprend un moyen de verrouillage formé par une dent de verrouillage agencée sur une face opposée à la face de guidage et présentant une surface d'appui formée au moins en partie d'un plan incliné par rapport à la direction de montage.

Selon l'exemple illustré sur les figures 2, 3, 5 et 6, le corps 12 du cylindre comporte trois dents de verrouillage notées respectivement 32A, 32B, 32C, dont une, notée 32A, est agencée sur la face 38 opposée à la face de guidage 28 d'une paroi latérale 24 et les deux autres 32B, 32C sont agencées sur la face 39 opposée à la face de guidage 29 de l'autre paroi latérales 26.

Chaque dent de verrouillage 32A, 32B, 32C comprend une surface d'appui, notée respectivement 42A, 42B, 42C formée au moins en partie d'un plan incliné par rapport à la direction de montage Y. Les plans inclinés des surfaces d'appui 42A, 42B, 42C forment chacun un angle avec la direction du sens de montage compris entre 30 et 60°, de préférence sensiblement égale à 45°.

Chaque dent de verrouillage 42 est configurée pour coopérer, lorsque le boîtier 16 est monté dans son logement 20, avec un moyen de fixation élastique du boîtier 16 de sorte à bloquer en translation le boîtier à l'intérieur du logement. Le moyen de fixation élastique comprend une patte de fixation 44 qui s'étend à partir d'une surface latérale 46 du boîtier 16 faisant face à une surface de guidage notamment au cours de l'assemblage. La patte de fixation 44 est configurée pour coopérer avec la dent 32 du corps 12 du cylindre 10. La patte de fixation 44 comporte une partie de liaison 48 s'étendant perpendiculairement à la paroi latérale 46 du boîtier 16 et une languette élastique 50 s'étendant à partir de la partie de liaison 48 selon la direction et le sens de montage et coopérant avec la surface d'appui 42 de la dent de verrouillage 32, de sorte qu'une extrémité libre 52 de la languette élastique soit en compression contre le plan incliné de la dent de verrouillage 32. Aussi, chaque dent de verrouillage 32 permet d'empêcher que le boîtier 16 ne soit démonté du corps 12 du cylindre 10 en le faisant translater selon un sens opposé à son sens de montage. La surface d'appui 42 en coopérant avec la languette de verrouillage 50 interdit le désassemblage lorsque le boîtier 16 est logé dans le logement 20 tout en supprimant le jeu selon la direction d'assemblage entre le boîtier 16 et le corps 12 du cylindre 10. Ainsi, lorsque le boîtier 16 est hébergé dans le logement 20, la languette élastique 50 est légèrement contrainte, ce qui permet d'éviter que le boîtier 16 ne se déplace de manière intempestive à l'intérieur du logement 20 en cas de vibrations.

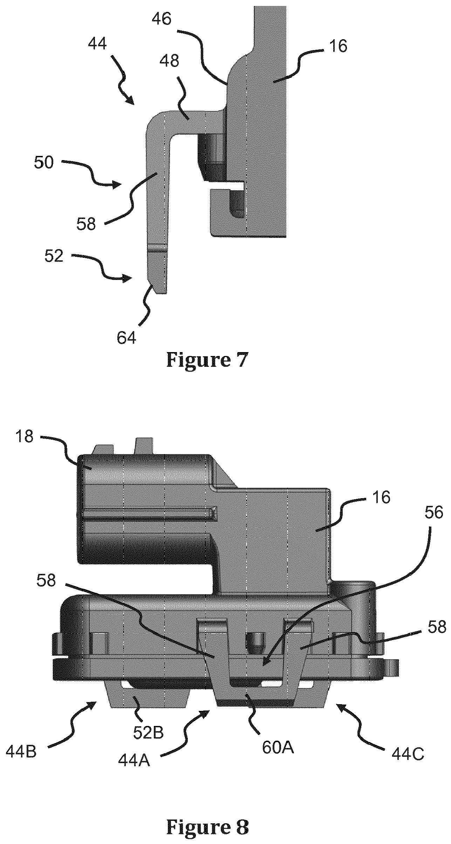

Sur l'exemple illustré et en référence également aux figures 7 à 10, le boitier 16 comporte trois languettes élastiques, chacune coopérant avec une dent de verrouillage 32 lorsque le boîtier 16 est monté dans son logement 20, dont une, notée 50A, est agencée sur une paroi latérale 46A du boîtier 16 et les deux autres 50B, 50C sont agencées sur une autre face latérale 46B opposée à la face latérale 46A. Aussi, le fait d'avoir un nombre d'ensembles formé d'une languette élastique et d'une dent de verrouillage associée différent de part et d'autre du boîtier permet d'éviter un montage à l'envers du boîtier sur le corps. Cet avantage peut également être réalisé par des longueurs et formes différentes pour chaque ensemble précité d'un côté et de l'autre du boîtier pour éviter un montage à l'envers du boîtier.

Par ailleurs et comme cela est davantage visible sur les figures 2 et 3, chaque dent de verrouillage 32 comporte un autre plan incliné 54, dirigé et configuré pour coopérer avec la languette élastique 50 lors de l'insertion du boîtier 16 dans le logement 20. Ainsi, lors du montage, le boîtier 16 est poussé dans le logement 20 selon la flèche F. Au cours de l'introduction du boîtier, la languette élastique 50 se déplace sur l'autre plan incliné 54 de la dent de verrouillage 32 et subit ainsi une déformation élastique en flexion, de sorte que son extrémité libre 52 s'écarte de l'axe X du cylindre 10 et de la face latérale 46 du boîtier 16.

La dent de verrouillage 32 peut notamment courir sur toute la longueur de la face opposée à la face de guidage d'une paroi latérale ou bien plusieurs dents de verrouillage peuvent être agencées les unes à côtés des autres comme c'est le cas sur le mode de réalisation illustré sur les figures.

En regard de la figure 7, la languette élastique 50 comporte, d'une part, une extrémité proximale 51 par laquelle elle est liée à la partie de liaison 48 de la face latérale 46 du boîtier 16 et, d'autre part, une extrémité distale libre 52.

Par ailleurs selon le mode de réalisation illustré sur les figures et notamment les figures 8, 9 et 4, la languette élastique 50 comprend à proximité de l'extrémité libre 52 un orifice 56 configuré pour recevoir en position assemblée une dent de verrouillage 32. L'orifice 56 est délimité d'une part par deux bandes longitudinales 58 s'étendant selon la direction Y perpendiculaire à l'axe X du cylindre de l'extrémité proximale 51 vers l'extrémité libre 52 et d'autre part une bande transversale 60 s'étendant selon la direction X et reliant les deux bandes longitudinales 58 entre-elles. La bande transversale 60 étant située vers l'extrémité libre 52 de la languette élastique 50. Ainsi, en position assemblée, la dent de verrouillage 32 est logée dans l'orifice 56 de sorte que la bande transversale 60 de l'extrémité libre 52 se situe en vis-à-vis du plan incliné de la surface d'appui 42 de la dent de verrouillage 32. En outre, si un effort de désassemblage est exercé sur le boîtier 16 en vue de le faire translater selon un sens opposé au sens de montage, l'extrémité libre 52 de la languette élastique 50 est sollicitée en compression contre la dent de verrouillage 13 et s'arc-boute contre le plan incliné de la surface d'appui 42 de la dent de verrouillage 32.

Par ailleurs, la surface d'appui 42 de la dent de verrouillage 32 comporte avantageusement une surface 62 s'étendant perpendiculairement à la languette élastique 50, agencée entre les deux plans inclinés 42, 54 et formant un arrêt franc rendant un démontage entre le boîtier 16 et le corps 12 du cylindre 10 encore plus difficile. Cette surface est notamment visible sur la figure 2.

En outre, l'extrémité libre 52 de la languette élastique 50 comporte un chanfrein 64 visible sur la figure 7. Le chanfrein 64 est formé sur une face extérieure de la languette élastique 50 opposée au reste du boîtier 16. Le chanfrein 50 permet avantageusement de limiter les prises efficaces de la languette élastique avec un outil, par exemple un tournevis, en vue du démontage du boîtier 16 du corps 12 du cylindre 10, rendant ainsi un tel démontage encore plus difficile.

Par ailleurs, comme cela est davantage visible sur les figures 2 à 6, la dent de verrouillage 32 comporte une nervure 70 de forme complémentaire à la forme de la languette élastique 50 et notamment de son extrémité libre 52 et s'étendant perpendiculairement à la languette élastique 50. Cette nervure 70 forme un écran qui fait saillie perpendiculairement à la languette élastique 50 en direction de l'extérieur du cylindre 10. Avantageusement, la nervure a une forme sensiblement en V limitant l'accès à la languette aussi bien à son extrémité libre 52 qu'aux bandes latérales 58. De préférence, la nervure 70 présente une hauteur telle qu'elle recouvre l'épaisseur de la languette élastique 50 au moins de l'extrémité libre 52 de la languette élastique 50.

Cette nervure 70 permet avantageusement d'interdire l'accès à languette élastique et de rendre difficile une prise efficace de la languette élastique avec un outil, par exemple un tournevis, en vue du démontage du boîtier 16 du corps 12 du cylindre 10, rendant ainsi un tel démontage encore plus difficile.

Par ailleurs, le cylindre 10 comporte avantageusement un ergot élastique 72 agencé selon une direction perpendiculaire au sens de montage de sorte que l'ergot 72 soit en compression entre la languette élastique 50 et la nervure 70.

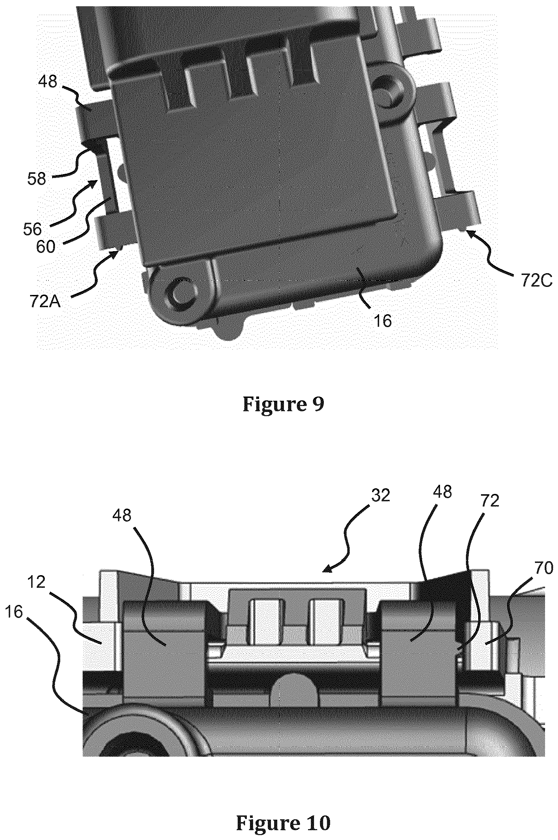

Selon le mode de réalisation illustré et davantage visible sur les figures 9 et 10, l'ergot élastique 72 est formé d'une protrusion s'étendant depuis l'extérieur d'une bande latérale 58 vers la nervure 70 quand le boîtier 16 est assemblé au corps 12 du cylindre 10, c'est-à-dire selon la direction axiale X dans l'exemple représenté.

La déformation de l'ergot peut être plastique ou élastique et permet de supprimer le jeu entre le boîtier et le corps du cylindre ici, dans la direction axiale X.

Bien entendu, selon un autre mode de réalisation, l'ergot élastique 72 peut être formé d'une protrusion s'étendant depuis la nervure 70 vers une bande latérale 58 quand le boîtier 16 est assemblé au corps 12 du cylindre 10, c'est-à-dire selon la direction axiale X dans l'exemple représenté.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

En particulier, bien que l'invention soit décrite ci-dessus en relation avec un cylindre de type émetteur, elle peut également s'appliquer de manière similaire à un récepteur.

Par ailleurs, bien que l'invention soit décrite ci-dessus avec des parois de guidage du corps du cylindre et par conséquent des languettes élastiques s'étendant dans des plans parallèles à l'axe X du cylindre, elle peut également s'appliquer de manière similaire et ou en combinaison avec des parois de guidage du corps du cylindre et par conséquent des languettes élastiques s'étendant dans des plans transverses à l'axe X du cylindre, c'est-à-dire perpendiculaire à l'axe du cylindre afin d'assurer un montage sans jeu dans la direction axiale entre le boîtier et le corps du cylindre tout en ayant un démontage impossible.

En outre, le nombre de languettes élastiques, leur longueur, leur forme et par conséquent ceux des moyens de verrouillage correspondant peuvent être différents d'une part de ceux du mode de réalisation décrit et d'autre part d'un côté à un autre du boîtier pour éviter un montage à l'envers du boîtier.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Cylindre (10) de commande hydraulique, notamment cylindre de commande hydraulique d'embrayage de véhicule automobile, comportant au moins un corps (12) et un boîtier (16) :
- le corps (12) comportant un logement (20) dans lequel le boîtier (16) est monté par translation selon une direction et un sens de montage (F), le logement (20) étant au moins délimité par deux parois latérales (24, 26) comportant deux faces de guidage (28, 29) se faisant face et coopérant avec le boîtier (16) afin de le guider en translation, et au moins une des deux parois latérales comportant un moyen de verrouillage (32) agencé sur une face opposée à la face de guidage et présentant une surface d'appui (42) formée au moins en partie d'un plan incliné par rapport à la direction de montage ; et
- le boîtier (16) comportant au moins un moyen de fixation élastique coopérant avec le moyen de verrouillage de sorte à bloquer en translation le boîtier (16) à l'intérieur du logement (20), le moyen de fixation comportant une languette élastique (50) s'étendant selon la direction et le sens de montage (F) et coopérant avec la surface d'appui (42) du moyen de verrouillage (32), de sorte qu'une extrémité libre (52) de la languette élastique soit en compression contre le plan incliné du moyen de verrouillage (32).

2. Cylindre selon la revendication 1, dans lequel le plan incliné de la surface d'appui forme un angle avec la direction du sens de montage compris entre 30 et 60°, de préférence sensiblement égale à 45°.

3. Cylindre selon la revendication 1 ou 2, dans lequel la surface d'appui (42) du moyen de verrouillage comporte une surface (62) s'étendant perpendiculairement à la languette élastique (50).

4. Cylindre selon l'une quelconque des revendications 1 à 3, dans lequel l'extrémité libre (52) de la languette élastique (50) comporte un chanfrein (64).

5. Cylindre selon l'une quelconque des revendications 1 à 4, dans lequel le moyen de verrouillage (32) comporte une nervure (70) de forme complémentaire à la forme de la languette (50) et s'étendant perpendiculairement à la languette élastique.

6. Cylindre selon la revendication 5, dans lequel la nervure (70) a une forme sensiblement en V.

7. Cylindre selon la revendication 5 ou 6, comportant au moins un ergot (72) agencé selon une direction perpendiculaire au sens de montage de sorte que l'ergot soit en compression entre la languette élastique (50) et la nervure (70).

8. Cylindre selon l'une quelconque des revendications 1 à 7, dans lequel le sens de montage est suivant une direction perpendiculaire à l'axe du cylindre (X).

9. Cylindre selon l'une quelconque des revendications 1 à 8, dans lequel les parois latérales du corps s'étendent sensiblement dans un plan parallèle à l'axe du cylindre.

10. Cylindre selon l'une quelconque des revendications 1 à 8, dans lequel les parois latérales du corps s'étendent sensiblement dans un plan transverse à l'axe du cylindre.

11. Cylindre selon l'une quelconque des revendications 1 à 10, dans lequel le boîtier (16) est réalisé principalement en matière plastique.

12. Cylindre selon l'une quelconque des revendications 1 à 11, dans lequel le nombre de languettes élastiques, leur longueur, leur forme et ceux des moyens de verrouillage correspondant sont différents d'un côté à un autre du boîtier.
